# EUROPÄISCHE PATENTSCHRIFT

(11) **EP 1 004 783 B1**
(45) Veröffentlichungstag und Bekanntmachung des Hinweises auf die Patenterteilung: **01.09.2004**
(21) Anmeldenummer: 99122445.2
(22) Anmeldetag: 11.11.1999
(51) Int. Cl.: F16C 25/06, B23Q 1/70, B23Q 5/56, B23Q 11/00, B23Q 1/26, H01L 41/09

(54) **Spindel für eine Werkzeugmaschine sowie Verfahren zum Einstellen einer Vorspannung eines in der Spindel angeordneten Lagers**
Spindle for a machine tool and method for setting the pre-loading of a spindle bearing
Broche pour une machine-outil et méthode de réglage de la précontrainte d'un palier de la broche

(30) Priorität: 25.11.1998 DE 19854348
(43) Veröffentlichungstag der Anmeldung: 31.05.2000
(73) Patentinhaber: Fischer Fortuna GmbH, 71263 Weil der Stadt (DE)
(72) Erfinder: Trippel, Daniel, 71686 Remseck (DE)
(74) Vertreter: Witte, Alexander, Dr.-Ing.

(56) Entgegenhaltungen:
- DE-A- 3 900 121
- DE-A- 19 803 842
- DE-C- 4 013 896

## Beschreibung

Die vorliegende Erfindung betrifft eine Spindel für eine Werkzeugmaschine, insbesondere eine Hochfrequenzspindel, mit einem ersten Spannelement zum Einstellen einer Vorspannung eines in der Spindel angeordneten Lagers, insbesondere eines Schrägkugellagers, wobei das erste Spannelement mindestens einen in seiner Längsausdehnung veränderlichen Piezoaktor aufweist und in Abhängigkeit der Längsausdehnung des Piezoaktors eine veränderbare Vorspannkraft auf zumindest eine Lagerschale des Lagers ausübt.

Die Erfindung betrifft darüber hinaus ein Verfahren zum Einstellen einer Vorspannung eines in einer Spindel angeordneten Lagers, mit den Schritten:
- Vorgeben einer eine Soll-Vorspannkraft repräsentierenden Größe,
- Bestimmen einer eine Ist-Vorspannkraft repräsentierenden Größe,
- Bestimmen einer Regeldifferenz zwischen den die Soll-Vorspannkraft und die Ist-Vorspannkraft repräsentierenden Größen, und
- Ansteuern eines in einem ersten Spannelement angeordneten Piezoaktors in Abhängigkeit der Regeldifferenz, wobei das erste Spannelement in Abhängigkeit der Längsausdehnung des Piezoaktors eine veränderbare Vorspannkraft auf zumindest eine Lagerschale des Lagers ausübt.

Eine derartige Spindel und ein derartiges Verfahren sind aus der DE-A-39 00 121 bekannt.

In dieser Schrift ist auch das der vorliegenden Erfindung allgemein zugrundeliegende Problem bereits angedeutet, nämlich eine an die jeweilige Betriebssituation der Spindel angepaßte Lagervorspannung zu erzeugen. Die Lagervorspannung dient dazu, im Betriebsablauf der Spindel jederzeit einen sicheren Kontakt zwischen den Gleitflächen des Lagers zu gewährleisten. Bei einem Kugellager ist dies beispielsweise der Kontakt zwischen den Kugeln und ihren Laufbahnen. Ohne eine derartige Lagervorspannung kann es durch die wechselnden Belastungen der Spindel beim Bearbeiten eines Werkstücks dazu kommen, daß die Gleitflächen ihren Kontakt zumindest zeitweise verlieren.

Grundsätzlich ist es natürlich möglich, die Lager der Spindel bei ihrer Herstellung für alle Einsatzbedingungen hinreichend fest vorzuspannen. Dies hat jedoch den Nachteil, daß die dann anliegende Vorspannung nicht an unterschiedliche Belastungen der Spindel bei unterschiedlichen Einsatzbedingungen angepaßt ist. So wird bspw. bei sehr hohen Drehzahlen der Spindel eine eher geringere Lagervorspannung benötigt als bei niedrigen Drehzahlen. Wird die Lagervorspannung nun auf den bei niedrigen Drehzahlen benötigten, höheren Wert fest eingestellt, so besteht die Gefahr, daß die Lager beim Betrieb der Spindel mit hohen Drehzahlen beschädigt werden. Außerdem ist in diesem Fall auch der Verschleiß der Lager aufgrund der höheren Reibung unnötig erhöht.

Aus der genannten DE-A-39 00 121 ist es bekannt, die Vorspannung des Lagers mit einem Spannelement zu erzeugen, das aus scheibenförmigen Piezoelementen besteht, die mechanisch in Reihe angeordnet und elektrisch parallel geschaltet sind. Ein derartiges Spannelement ist in der Lage, sich durch die Vergrößerung der Scheibendicke der einzelnen Piezoelemente im Mikrometerbereich auszudehnen. Des weiteren ist aus dieser Druckschrift bekannt, einen Deckring an den Piezoelementen mit einem Dehnmeßstreifen zu versehen. Aus der Stauchung des Deckringes, die damit erfaßt werden kann, läßt sich dann die anliegende Vorspannkraft berechnen. Das Spannelement und der Dehnmeßstreifen sind in einer Weiterbildung über einen Regler gekoppelt.

Die bekannte Vorrichtung zur Einstellung der Vorspannung des Spindellagers besitzt jedoch den Nachteil, daß die Längsausdehnung eines einzelnen Piezoelementes nur wenige Mikrometer beträgt. Bei Spindeln, die über einen großen Drehzahlbereich hinweg verwendet werden sollen, werden jedoch deutlich größere Stellwege für eine stets sichere Vorspannung der Lager benötigt. Um mit Piezoelementen einen Stellweg von bspw. 200 µm zu erreichen, müßte dementsprechend ein sehr großer Stapel von Piezoelementen mechanisch in Reihe angeordnet verwendet werden, so daß sich die Längsausdehnungen vieler Piezoelemente zu dem benötigten Wert addieren. Dies ist jedoch im Hinblick auf den dann benötigten Bauraum des Spannelements und die in der Spindel zur Verfügung stehenden Platzverhältnisse nachteilig.

Ein weiterer Nachteil der bekannten Vorrichtung ergibt sich, wenn mehrere Spannelemente mit Piezoaktoren umfänglich an der Spindel angeordnet sind. In diesem Fall müssen nämlich entsprechend viele Dehnmeßstreifen in der Nähe der jeweiligen Piezoaktoren angeordnet werden, um eine individuelle Regelung der Lagervorspannung zu ermöglichen. Eine zentrale Meßwertaufnahme, die einen für die gewünschte Regelung aussagekräftigen Meßwert liefert, ist bei der bekannten Vorrichtung nicht möglich.

Aus der DE-C-40 13 896 ist eine Vorrichtung zum Verändern der Vorspannung von Schrägkugellagern bekannt, bei der eine Spannbuchse verwendet wird, die mit einer mit Öldruck beaufschlagten Spreiznut versehen ist. Die Spreiznut wird dabei unter Öldruckeinfluß aufgespreizt und dies führt zu einer Vergrößerung der Länge der Spannbuchse. Dieses hydraulisch arbeitende System macht es jedoch erforderlich, daß zum Vergrößern bzw. Verringern der Lagervorspannung jeweils eine bestimmte Menge Hydraulikflüssigkeit in die Spreiznut hineingedrückt bzw. aus ihr abgezogen wird. Dies wiederum ist nur unter Verwendung von entsprechenden Ventilen möglich, deren Einbau, Abdichtung und Ansteuerung im Hinblick auf die Platzverhältnisse und die teilweise rauhen Einsatzbedingungen einer Spindel Schwierigkeiten bereitet.

Es ist daher Aufgabe der vorliegenden Erfindung, eine Spindel für eine Werkzeugmaschine mit einer alternativen Vorrichtung zur Lagervorspannung anzugeben, die die zuvor genannten Nachteile vermeidet. Es ist darüber hinaus Aufgabe der vorliegenden Erfindung, ein Verfahren der eingangs genannten Art anzugeben, dessen Realisierung nur einen geringen Bauraum erfordert und das gleichzeitig eine sehr exakte und zuverlässige Einstellung der Lagervorspannung auch über einen größeren Stellbereich hinweg ermöglicht.

Diese Aufgabe wird in bezug auf die eingangs genannte Spindel dadurch gelöst, daß im Kraftfluß zwischen dem ersten Spannelement und der Lagerschale ein Hydraulikelement angeordnet ist, welches eingangsseitig ein von dem ersten Spannelement beaufschlagtes Antriebsmittel und ausgangsseitig ein Abtriebsmittel aufweist, wobei der hydraulisch wirksame Querschnitt des Antriebsmittels größer ist als der hydraulisch wirksame Querschnitt des Abtriebsmittels.

Die Aufgabe wird hinsichtlich des eingangs genannten Verfahrens dadurch gelöst, daß die auf die Lagerschale einwirkende Längsausdehnung des Piezoaktors mit einem im Kraftfluß zwischen dem ersten Spannelement und der Lagerschale angeordneten Hydraulikelement hydraulisch vergrößert wird.

Die Vergrößerung der Längsausdehnung des Piezoaktors erfolgt in dem angegebenen Hydraulikelement dadurch, daß der hydraulisch wirksame Querschnitt des Antriebsmittels größer ist als der hydraulisch wirksame Querschnitt des Abtriebsmittels. Dies führt nach den bekannten Gesetzen der Hydromechanik dazu, daß der Stellweg des Abtriebsmittels bei einem konstant gehaltenen Hydraulikvolumen größer ist als der Stellweg des Antriebsmittels. Unter dem hydraulisch wirksamen Querschnitt wird dabei in diesem Zusammenhang die Größe derjenigen Fläche verstanden, die auf eine in dem Hydraulikvolumen eingebrachte Hydraulikflüssigkeit einwirkt bzw. die mit der Hydraulikflüssigkeit beaufschlagt wird.

Die erfindungsgemäße Spindel weist somit ein piezoaktorisches Spannelement auf, dessen Stellweg hydraulisch vergrößert ist. Das verwendete Hydraulikelement kommt jedoch ohne Ventile aus, die im Arbeitsbetrieb der Spindel betätigt werden müßten. Dementsprechend können auch alle mit solchen Ventilen verbundene Maßnahmen entfallen, und zwar sowohl bei der Konstruktion als auch im Betrieb der Spindel. Gleichzeitig kann jedoch auch der für das erste Spannelement benötigte Bauraum sehr klein gehalten werden, da die an sich geringe Längsausdehnung des Piezoaktors von bspw. 30 µm durch das Hydraulikelement auf bspw. 200 µm vergrößert wird.

In Verbindung mit einer an sich bekannten Öl-Luft-Minimalmengenschmierung kann eine derartige Spindel für Drehzahlen von 45.000 Umdrehungen pro Minute und mehr verwendet werden. Dabei ist über den gesamten Drehzahlbereich eine exakte Einstellung der Lagervorspannung möglich. Der für das erste Spannelement benötigte Bauraum ist gegenüber einem allein mit einem Piezoaktor arbeitenden Spannelement deutlich verkleinert. Er wird auch durch das Hydraulikelement nicht wesentlich vergrößert, welches in einem Ausführungsbeispiel der Erfindung ein Hydraulikvolumen von nur 450 mm³ besitzt. Somit ist die eingangs gestellte Aufgabe vollständig gelöst.

In einer Ausgestaltung der erfindungsgemäßen Spindel ist das Antriebsmittel achsgleich zu der Längsausdehnung des Piezoaktors angeordnet.

Diese Maßnahme besitzt den Vorteil, daß hierdurch eine sehr gute Kraftübertragung von dem Piezoaktor auf das Antriebsmittel des Hydraulikelements erreicht wird. Dies wiederum führt zu einem guten Wirkungsgrad und einer optimalen Ausnutzung der sehr geringen Längsausdehnung des Piezoaktors.

In einer weiteren Ausgestaltung der Spindel ist das Abtriebsmittel ein formstabiler Kolben. Das Antriebsmittel ist demgegenüber vorzugsweise eine flexible Membran.

Generell kann sowohl das Antriebs- wie auch das Abtriebsmittel des Hydraulikelements ein formstabiler Kolben, bspw. aus einem metallischen Werkstoff sein. Alternativ können das Antriebsund das Abtriebsmittel jedoch auch flexible Membranen sein, die das Hydraulikvolumen abschließen. Der Vorteil eines formstabilen Kolbens als Abtriebsmittel besteht darin, daß das Abtriebsmittel dann keine wesentliche Verformung erfährt, die einerseits Energie kostet und andererseits den auf der Ausgangsseite des Hydraulikelements maximal erreichbaren Stellweg verkürzt. Des weiteren bietet ein Kolben als Abtriebsmittel den Vorteil, daß er gegenüber einer sich verformenden Membran unempfindlicher ist gegenüber Materialermüdungen. Dies ist insbesondere vorteilhaft bei dem Abtriebsmittel, da dieses erfindungsgemäß einen größeren Bewegungshub ausführt als das Antriebsmittel.

Auf der Antriebsseite des Hydraulikelements ist es demgegenüber sehr gut möglich, als Antriebsmittel eine flexible Membran anstelle eines Kolbens zu verwenden. Der Vorteil einer solchen Membran ist die einfachere Abdichtung des Hydraulikelements.

In einer weiteren Ausgestaltung der Erfindung weist das Hydraulikelement Mittel zum Einstellen einer hydraulisch erzeugten Grundvorspannung des Lagers auf.

Als Mittel zum Einstellen der hydraulisch erzeugten Grundvorspannung kommt jedes Mittel in Frage, mit dem das Hydraulikvolumen des Hydraulikelements unter einen einstellbar statischen Druck gesetzt werden kann. Hierdurch wird erreicht, daß das Lager der Spindel bereits ohne die Verwendung des Piezoaktors eine statische Vorspannung erhält. Die Maßnahme besitzt somit den Vorteil, daß nicht die gesamte benötigte Vorspannkraft für das Lager mit Hilfe des Piezoaktors erzeugt werden muß. Dies vereinfacht dessen Auslegung und Dimensionierung. Andererseits ist jedoch die Erzeugung einer statischen Grundvorspannung auf diese Weise sehr einfach möglich, da das Hydraulikvolumen des Hydraulikelements erfindungsgemäß bereits zur Verfügung steht.

In einer weiteren Ausgestaltung der Erfindung weist die Spindel umfänglich verteilt mehrere erste Spannelemente auf.

Diese Maßnahme besitzt den Vorteil, daß das Lager rund um den Umfang der Spindel gleichmäßig vorgespannt werden kann. Hierdurch verteilt sich zum einen die Last, die jedes einzelne Spannelement aufbringen muß. Gleichzeitig wird so jedoch auch ein Verkanten der in dem Lager gehaltenen Spindelwelle vermieden.

In einer weiteren Ausgestaltung der zuvor genannten Maßnahme weist die Spindel umfänglich verteilt drei erste Spannelemente auf, die mit drei umfänglich verteilten Antriebs- und Abtriebsmitteln zusammenwirken.

Diese Maßnahme ist das Ergebnis aufwendiger Berechnungen und Simulationen, bei denen zahlreiche Konstruktionsparameter der erfindungsgemäßen Spindel variiert wurden. Hierbei hat sich die genannte Anzahl von drei ersten Spannelementen in Kombination mit drei Antriebs- und Abtriebsmitteln als optimal erwiesen.

In einer weiteren Ausgestaltung der Erfindung weist das Hydraulikelement ein sich umfänglich erstreckendes Hydraulikvolumen auf und die ersten Spannelemente wirken alle auf das Hydraulikvolumen ein.

Alternativ zu dieser Maßnahme ist es denkbar, jedes erste Spannelement mit einem eigenen Hydraulikelement zu kombinieren. Die genannte Maßnahme besitzt demgegenüber jedoch den Vorteil, daß bei der Konstruktion und Herstellung der Spindel nur ein einziges Hydraulikvolumen in dem zur Verfügung stehenden Bauraum der Spindel untergebracht werden muß. Des weiteren wird durch ein einziges, sich umfänglich erstreckendes Hydraulikvolumen nochmals die Gleichmäßigkeit der Lagervorspannung verbessert. Weiterhin ist es bei dieser Maßnahme möglich, den Ausfall eines Piezoaktors im Betrieb der Spindel kurzfristig durch eine größere Längsausdehnung des oder der übrigen Piezoaktoren zu kompensieren. Hierdurch wird die Betriebssicherheit der erfindungsgemäßen Spindel erhöht.

In einer weiteren Ausgestaltung der Erfindung weist das Hydraulikelement einen Drucksensor auf, mit dem ein Istdruck in dem Hydraulikvolumen bestimmbar ist.

Diese Maßnahme besitzt den Vorteil, daß hierdurch auf einfache Weise ein Meßwert erhältlich ist, aus dem eine die Ist-Vorspannkraft repräsentierende Größe herleitbar ist. In Verbindung mit der zuvor genannten Ausgestaltung besitzt die Maßnahme darüber hinaus den weiteren Vorteil, daß dieser Meßwert zentral an einer Stelle mit Wirkung für sämtliche ersten Spannelemente erhältlich ist. Hierdurch kann die Anzahl der für eine Regelung der Lagervorspannung benötigten Meßwertaufnehmer reduziert werden.

In einer weiteren Ausgestaltung der zuvor genannten Maßnahme ist das Ausgangssignal des Drucksensors einem Regler zum Erzeugen eines Stellsignals für das Spannelement zuführbar.

Eine dementsprechende Ausgestaltung des erfindungsgemäßen Verfahrens besteht darin, daß die die Ist-Vorspannkraft repräsentierende Größe mit Hilfe eines Drucksensors bestimmt wird, der den Druck in einem Hydraulikvolumen des Hydraulikelements mißt.

Diese Maßnahme besitzt den bereits zuvor angedeuteten Vorteil, daß nämlich so auf einfache Weise eine Regelung der Lagervorspannung im Arbeitsbetrieb der Spindel möglich ist. Hierdurch ist dann gewährleistet, daß die eingestellte Lagervorspannung jeweils optimal an die herrschenden Betriebsbedingungen angepaßt ist. Eine Überlastung des Lagers ist hier ebenso zu verhindern wie der Verlust des Kontaktes zwischen den Gleitflächen des Lagers.

In einer weiteren Ausgestaltung der erfindungsgemäßen Spindel, die jedoch auch für sich in Alleinstellung anwendbar ist, ist eine Hydraulikflüssigkeit in dem Hydraulikelement eine metallische Flüssigkeit mit einem Schmelzpunkt von weniger als 20°C.

Als Material für die Hydraulikflüssigkeit kommen hier insbesondere die Produkte MCP 11 bzw. MCP 16 in Frage, die bspw. von der Firma HEK GmbH in Lübeck vertrieben werden. Diese Produkte bestehen aus einer Mischung aus Gallium, Indium und Zinn in einem Mischungsverhältnis, bei dem Gallium ca. zwei Drittel ausmacht. Aufgrund der Tatsache, daß der Schmelzpunkt dieser Stoffe unterhalb von 20°C liegt, ist es möglich, diese bei allen realistisch auftretenden Betriebsbedingungen der erfindungsgemäßen Spindel als Hydraulikflüssigkeit einzusetzen. Die metallischen Flüssigkeiten bieten dabei den Vorteil, daß sie sehr hohe Kompressionsmodul-Werte von bis zu 25.000 N/mm² besitzen. Hierdurch kann die Steifigkeit der Spindel verbessert werden. Besonders optimal ist die Verwendung derartiger metallischer Flüssigkeiten in Verbindung mit den bereits zuvor genannten Ausgestaltungen der Erfindung, bei denen drei umfänglich verteilte erste Spannelemente sowie ein nur sehr geringes umfänglich verteiltes Hydraulikvolumen verwendet werden.

In einer weiteren Ausgestaltung der Erfindung weist die Spindel zumindest ein weiteres Spannelement auf, das von dem ersten Spannelement unabhängig ist, wobei sich die Kraftwirkung des weiteren Spannelementes mit der Kraftwirkung des ersten Spannelementes überlagert.

Diese Maßnahme besitzt den Vorteil, daß hierdurch ebenfalls auf einfache Weise eine statische Grundvorspannung des Spindellagers realisierbar ist. In Folge davon ist es möglich, das bzw. die ersten Spannelemente in ihrer Konstruktion daraufhin zu optimieren, nur einen variablen Anteil für die gesamte Lagervorspannung zu erzeugen. Dementsprechend kann die Längsausdehnung des bzw. der verwendeten Piezoaktoren sowie die Dimensionierung des Hydraulikelements optimal an den benötigten Variationsbereich der Lagervorspannung angepaßt werden. Des weiteren bietet die Maßnahme den Vorteil, daß eine Lagergrundvorspannung auch unabhängig von dem Funktionieren des bzw. der ersten Spannelemente gewährleistet ist. Hierdurch wird die Betriebssicherheit der Spindel erhöht, da die Lagervorspannung dann auch gegeben ist, wenn die ersten Spannelemente ausfallen, bspw. bei einem Fehler im Regler.

In einer weiteren Ausgestaltung der zuvor genannten Maßnahme ist das weitere Spannelement ein mechanisches Federelement.

Diese Maßnahme knüpft an die zuvor genannten Vorteile an. Der Vorteil eines mechanischen Federelementes ist, daß es eine Grundvorspannung des Spindellagers unabhängig von einer Stromversorgung oder dem Funktionieren eines hydraulischen Systems gewährleistet. Darüber hinaus kann die Grundvorspannung, an deren Genauigkeit aufgrund der im Normalfall zusätzlich verwendeten ersten Spannelemente nur geringere Anforderungen gestellt werden müssen, auf diese Weise sehr einfach erreicht werden.

In einer weiteren Ausgestaltung des erfindungsgemäßen Verfahrens erfolgt die Bestimmung der Ist-Vorspannkraft und/oder die Vorgabe der Soll-Vorspannkraft in Abhängigkeit von im Betrieb der Spindel auftretenden Längenänderungen an der Spindel.

Durch diese Maßnahme wird die Regelung der Lagervorspannung optimiert. Es hat sich nämlich bei den bereits genannten Berechnungen und Simulationen gezeigt, daß die Länge der Spindel sich im Betrieb aufgrund von thermischen Einflüssen und auch unter der Einwirkung der Fliehkraft bei hohen Drehzahlen spürbar verändert. Durch die Einbeziehung dieser Effekte in den Regelkreis ist es möglich, die Lagervorspannung jeweils optimal an die herrschenden Betriebsbedingungen anzupassen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine stark schematisierte Querschnittsansicht einer erfindungsgemäßen Spindel entlang der Linie I-I von Fig. 2.,
- Fig. 2: eine Lagerhülse der erfindungsgemäßen Spindel aus Fig. 1 in der Ansicht entlang der Linie II-II;
- Fig. 3: in stark vergrößertem Maßstab und im Schnitt eine bevorzugte Ausführungsform eines Spannelementes zur Verwendung in einer Spindel gemäß Fig. 1; und
- Fig. 4: eine schematische Darstellung eines Ausführungsbeispiels des erfindungsgemäßen Verfahrens.

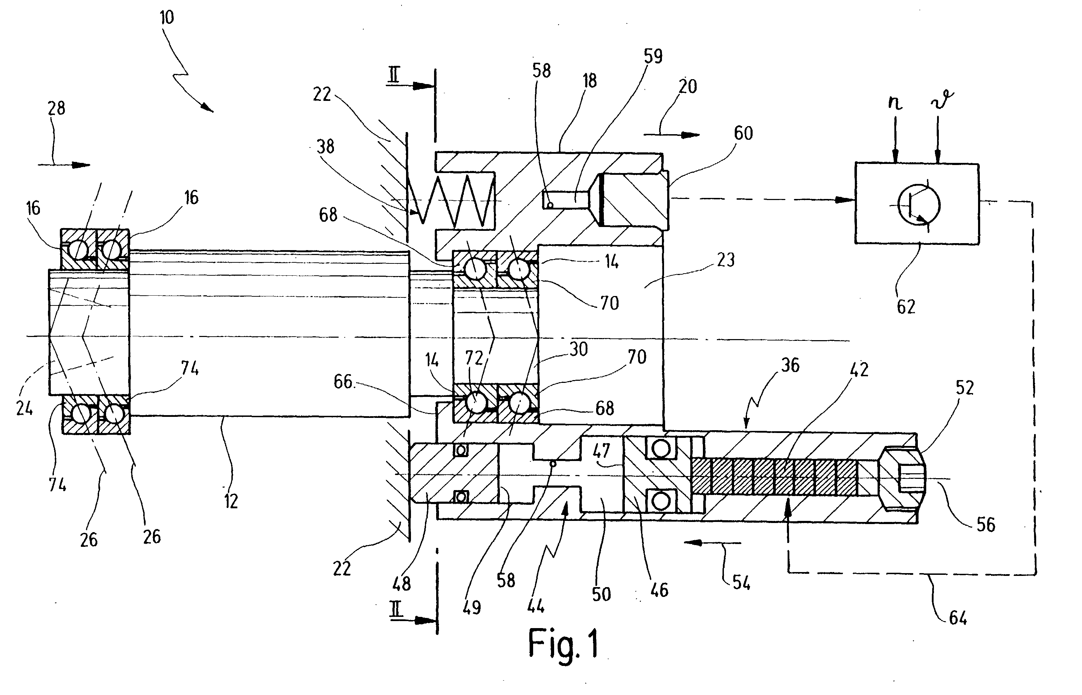

In Fig. 1 ist eine erfindungsgemäße Spindel in ihrer Gesamtheit mit der Bezugsziffer 10 bezeichnet.

Die Spindel 10 weist eine Welle 12 auf, deren Enden jeweils in zwei nebeneinander angeordneten Kugellagern 14, 16 gelagert sind. Die Welle 12 besitzt abschnittsweise einen unterschiedlich großen Durchmesser. In ihrem Mittelteil ist sie mit einem hier nicht näher dargestellten Antrieb versehen, der in einem Ausführungsbeispiel der Erfindung ein Asynchronmotor ist. Dementsprechend handelt es sich hierbei um eine an sich bekannte Motorspindel, deren Welle von dem innenliegenden Antrieb bewegt wird. Die Kugellager 14 und 16 sind im vorliegenden Fall Schrägkugellager.

Die Kugellager 16 sind von einer Lagerhülse 18 umgeben, die in Richtung des Pfeils 20 (oder entgegengesetzt) gegenüber einem hier nur schematisiert dargestellten Spindelgehäuse 22 bewegbar ist.

Mit der Bezugsziffer 23 ist eine Ausnehmung in der Lagerhülse 18 bezeichnet, mit der diese an einer entsprechenden Aufnahme einer hier nicht dargestellten Werkzeugmaschine befestigt werden kann.

An ihrem der Lagerhülse 18 abgewandten, unteren Ende besitzt die Welle 12 eine hier ebenfalls nur schematisch angedeutete Werkzeugaufnahme 24. Hier ist bspw. ein Fräskopf zur Bearbeitung eines Werkstücks einsetzbar.

Die beiden am unteren Ende der Welle 12 angeordneten Schrägkugellager 16 sind, wie anhand der Drucklinien 26 angedeutet, in der Lage, in Richtung des Pfeils 28 auf die Spindel 10 einwirkende axiale Druckkräfte in das Spindelgehäuse 22 abzuleiten. Demgegenüber dienen die in der Lagerhülse 18 angeordneten Schrägkugellager 14 dazu, auf die Spindel 10 in entgegengesetzter Richtung einwirkende Zugkräfte aufzunehmen, wie dies anhand der Drucklinien 30 angedeutet ist.

Die Lagerhülse 18 besitzt umfänglich verteilt mehrere erste Spannelemente 36 sowie weitere Spannelemente 38. In der in Fig. 1 dargestellten Ansicht ist jedoch nur jeweils ein erstes Spannelement 36 sowie ein weiteres Spannelement 38 zu erkennen. Dementsprechend wird bei den nachfolgenden Erläuterungen zur Vereinfachung der Darstellung auch nur auf jeweils ein erstes und ein weiteres Spannelement 36 bzw. 38 Bezug genommen.

Das erste Spannelement 36 weist einen Piezoaktor 42 auf, der im vorliegenden Ausführungsbeispiel aus einem Stapel von in Reihe angeordneten Piezoelementen besteht. Demgegenüber ist das weitere Spannelement 38 im vorliegenden Ausführungsbeispiel eine mechanische Druckfeder, die zwischen der Lagerhülse 18 und dem Spindelgehäuse 22 abgestützt ist.

In dem nachfolgend noch ausführlicher beschriebenen Kraftfluß zwischen dem ersten Spannelement 36 und den Kugellagern 14, 16 ist ein Hydraulikelement 44 angeordnet. Das Hydraulikelement 44 weist ein Antriebsmittel 46 mit einem hydraulisch wirksamen Querschnitt 47 sowie ein Abtriebsmittel 48 mit einem hydraulisch wirksamen Querschnitt 49 auf. Zwischen dem Antriebsmittel 46 und dem Abtriebsmittel 48 befindet sich ein Hydraulikvolumen 50.

Sowohl das Antriebsmittel 46 wie auch das Abtriebsmittel 48 sind in der schematischen Darstellung gemäß Fig. 1 verschieblich gelagerte Kolben aus Metall. Der hydraulisch wirksame Querschnitt 47 ist demnach die Kolbenfläche, mit der das Antriebsmittel 46 auf eine in das Hydraulikvolumen 50 eingebrachte Hydraulikflüssigkeit einwirkt. Dementsprechend ist der hydraulisch wirksame Querschnitt 49 des Abtriebsmittels 48 die Kolbenfläche, die dort mit dem Hydraulikvolumen 50 bzw. der Hydraulikflüssigkeit in Kontakt steht.

Mit der Bezugsziffer 52 ist Ausführungsbeispiel gemäß Fig. 1 eine Stellschraube bezeichnet, die in Richtung des Pfeils 54 entlang der Achse 56 bewegbar ist. Die Stellschraube 52 bildet mit ihrem unteren Ende einen Anschlag für den Piezoaktor 42. Dieser wiederum liegt mit seinem unteren Ende an dem Antriebsmittel 46 des Hydraulikelements 44 an. Die drei Elemente sind dabei entlang derselben Achse 56 angeordnet.

Mit Hilfe der Stellschraube 52 ist es möglich, den hinteren Anschlag des Piezoaktors 42 und damit die Ruheposition des Antriebsmittels 46 einzustellen. Hierdurch ist wird das Hydraulikvolumen 50 mit einem einstellbar festen Druck beaufschlagt.

Mit der Bezugsziffer 58 ist eine Druckleitung bezeichnet, die umfänglich um die Lagerhülse 18 verläuft und das Hydraulikvolumen 50 mit einem Hydraulikvolumen 59 verbindet. Das Hydraulikvolumen 59 steht in Kontakt mit einem Drucksensor 60, mit dem der Druck in dem verbundenen Hydrauliksystem 50, 58, 59 meßbar ist.

Wie bereits zuvor angedeutet, besitzt die Spindel 10 in diesem Ausführungsbeispiel umfänglich verteilt mehrere erste Spannelemente 36, die mit mehreren Antriebsmitteln 46 und Abtriebsmitteln 48 zusammenwirken. Dabei sind die Hydraulikvolumina 50 zwischen den einzelnen Antriebsmitteln 46 und Abtriebsmitteln 48 ebenfalls durch die Druckleitung 58 miteinander verbunden. Insgesamt ergibt sich somit ein sich umfänglich erstreckendes gemeinsames Hydraulikvolumen für alle Antriebs- und Abtriebsmittel 46, 48. Die ersten Spannelemente 36 wirken somit alle auf das gemeinsame Hydraulikvolumen ein.

Mit Hilfe des Drucksensors 60 ist es möglich, den Druck in dem gemeinsamen Hydraulikvolumen 50, 58, 59 an einer zentralen Stelle zu erfassen. Dieser Druck ist für die Ist-Vorspannkraft der Lager 14, 16 repräsentativ.

Ein Ausgangssignal des Drucksensors 60 ist im vorliegenden Ausführungsbeispiel einem Regler 62 zugeführt, der außerhalb der Spindel 10 angeordnet ist. Des weiteren erhält der Regler 62 im vorliegenden Ausführungsbeispiel Meßsignale, die für die aktuelle Drehzahl n sowie für die Betriebs- oder Umgebungstempera-Umgebungstemperatur ϑ der Spindel 10 repräsentativ sind. Aus diesen Größen bestimmt der Regler 62 mit Hilfe des nachfolgend erläuterten Verfahrens ein Stellsignal 64, das die Längsausdehnung des Piezoaktors 42 in Richtung des Pfeils 54 steuert.

Der Kraftfluß zwischen dem ersten Spannelement 36 und den Lagern 14 bzw. 16 verläuft nun folgendermaßen: Eine Längsausdehnung des Piezoaktors 42 in Richtung des Pfeils 54 führt zu einer achsgleichen Verschiebung des Antriebsmittels 46. Die Verschiebung des Antriebsmittels 46 erzeugt einen zusätzlichen Druck auf die in dem Hydraulikvolumen 50 eingebrachte Hydraulikflüssigkeit. Dieser Druck überträgt sich auf das Abtriebsmittel 49, das dementsprechend ebenfalls in Richtung des Pfeils 54 bewegt wird. Da hierbei erfindungsgemäß der hydraulisch wirksame Querschnitt 47 des Antriebsmittels 46 größer ist als der hydraulisch wirksame Querschnitt 49 des Abtriebsmittels, ist der Stellweg des Abtriebsmittels 49 gegenüber dem Stellweg des Antriebsmittels 46 und damit gegenüber der Längsausdehnung des Piezoaktors 42 vergrößert.

Das Abtriebsmittel 48 befindet sich im Anschlag an dem Spindelgehäuse 22 und übt bei einer Bewegung in Richtung des Pfeils 54 eine Kraft auf die Lagerhülse 18 in Richtung des Pfeils 20 aus. Hierdurch wird die Lagerhülse 18 in Richtung des Pfeils 20 von dem Spindelgehäuse 22 weg gedrückt. Über einen Vorsprung 66 überträgt die Lagerhülse 18 diese Bewegung bzw. die mit ihr verbundene Kraft auf die äußeren Lagerschalen 68 der in der Lagerhülse 18 angeordneten Kugellager 14. Hierdurch werden die äußeren Lagerschalen 68 in axialer Richtung gegen die inneren Lagerschalen 70 gedrückt. Gleichzeitig werden dabei die Kugeln 72 der Kugellager 14 in ihre Laufbahnen gepreßt.

Die inneren Lagerschalen 70 der Kugellager 14 sind fest mit der Welle 12 verbunden. Dementsprechend wird auch die Welle 12 durch eine Bewegung der Lagerhülse 18 in Richtung des Pfeils 20 in diese Richtung gezogen. Am unteren Ende der Welle 12 sind die inneren Lagerschalen 74 der Kugellager 16 ebenfalls fest mit der Welle 12 verbunden. Hierdurch überträgt sich die Bewegung der Lagerhülse 18 bzw. die ihr zugrundeliegende Kraft auch auf die inneren Lagerschalen 74 der Kugellager 16, so daß auch diese in gewünschter Weise vorgespannt werden.

Diesem Kraftfluß des bzw. der umfänglich verteilten ersten Spannelemente 36 überlagert sich die ebenfalls in Richtung des Pfeils 20 auf die Lagerhülse 18 einwirkende Kraftwirkung der weiteren Spannelemente 38, durch die somit eine Grundvorspannung der Kugellager 14 bzw. 16 erreicht wird. Gleiches gilt auch für die statische hydraulische Vorspannung, die mit Hilfe der Stellschraube 52 erzeugt werden kann.

In einem bevorzugten Ausführungsbeispiel der Erfindung beträgt die mit Hilfe der Stellschraube 52 und der weiteren Spannelemente 38 erzeugte statische Lagervorspannung 800 N. Diese Grundvorspannung kann mit Hilfe der erfindungsgemäßen ersten Spannelemente 36 im Betrieb der Spindel 10 drehzahlabhängig auf bis zu 1.600 N erhöht werden. Bevorzugterweise erfolgt die Einstellung der Vorspannkraft so, daß diese bei höchsten Drehzahlen ihren niedrigsten Wert annimmt.

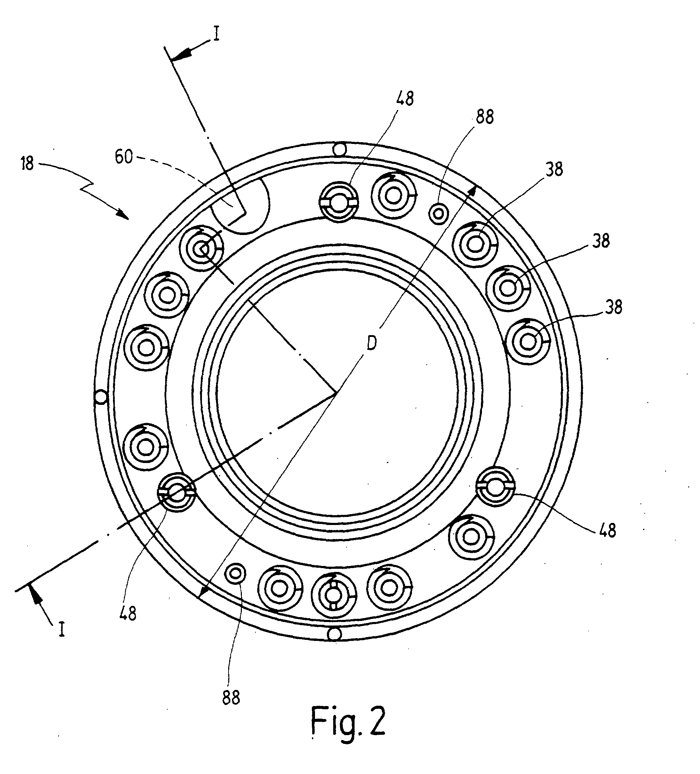

In der Draufsicht auf die Lagerhülse 18 in Fig. 2 ist zu erkennen, wie die im vorliegenden Fall drei ersten Spannelemente 36 sowie die insgesamt 12 weiteren Spannelemente 38 am Umfang der Lagerhülse 18 verteilt angeordnet sind. Die umfängliche Lage der drei ersten Spannelemente 36 ist dabei aufgrund ihrer achsgleichen Anordnung mit der Lage der Abtriebsmittel 48 identisch.

Mit der Bezugsziffer 88 sind zwei Kanäle bezeichnet, durch die das sich in der Lagerhülse 18 umfänglich erstreckende Hydraulikvolumen befüllbar und entlüftbar ist. Außerdem ist auch die Position des Drucksensors 60 in dieser Darstellung angedeutet.

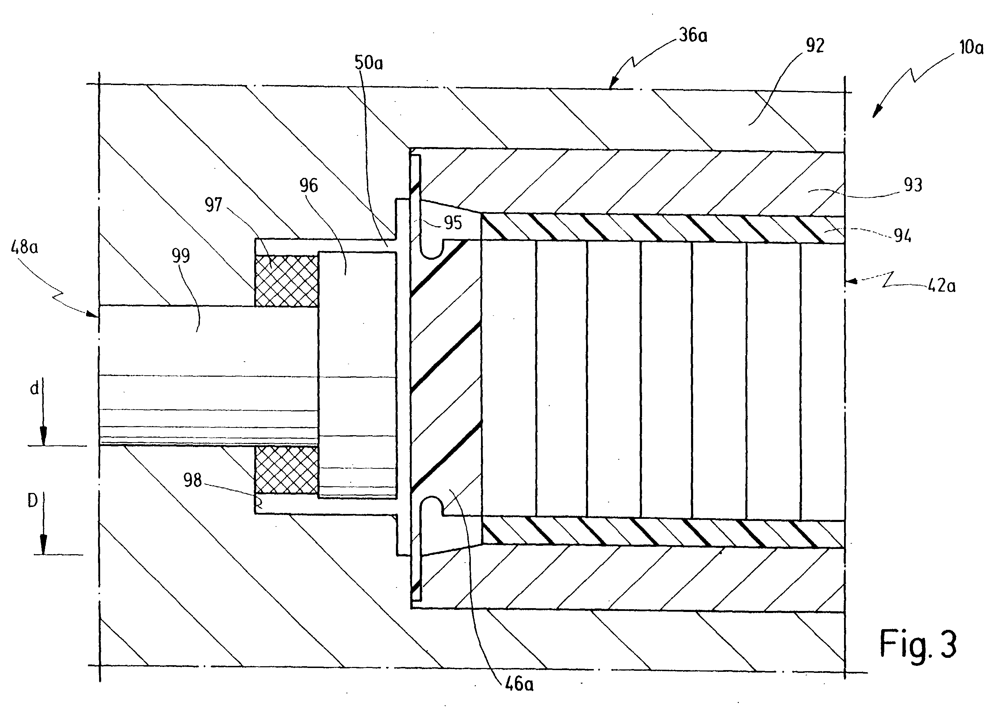

Fig. 3 zeigt ein alternatives, besonders bevorzugtes Ausführungsbeispiel, bei dem gleiche Elemente mit gleichen Bezugszeichen wie in Fig. 1 bezeichnet sind und lediglich ein "a" zur Unterscheidung hinzugefügt wurde.

Man erkennt aus Fig. 3, daß das erste Spannelement 36a ein Gehäuse 92 umfaßt, in das eine Lagerhülse 93 eingelassen ist. Die Lagerhülse 83 umgibt ihrerseits eine Isolierhülse 94, die den Piezoaktor 42a umschließt.

An der vorderen Stirnseite des Piezoaktors 42a ist das Antriebsmittel 46a befestigt, das beim Ausführungsbeispiel gemäß Fig. 3 in eine dünnwandige Membran 95 ausläuft, die aus Metall oder Kunststoff bestehen kann. Die Membran 95 ist an ihrem Umfang zwischen der Lagerhülse 93 und dem Gehäuse 92 eingefaßt. Der Durchmesser, unter dem die Membran 95 an der von der Lagerhülse 93 abgewandten Seite vom Gehäuse 92 gefaßt ist, ist in Fig. 3 mit D bezeichnet. Der Durchmesser D entspricht dem antriebsseitigen wirksamen hydraulischen Querschnitt.

Das Abtriebsmittel 48a wird beim Ausführungsbeispiel gemäß Fig. 3 durch einen Kolben 96 gebildet, der vorne auf der Stirnseite einer Kolbenstange 99 sitzt. Zwischen dem Kolben 96 und einer radialen Stirnfläche 98 im Gehäuse 92 ist eine elastische Dichtung 97 eingeschlossen.

Der Durchmesser der Kolbenstange 99 ist d bezeichnet. d entspricht dem wirksamen hydraulischen Querschnitt auf der Abtriebsseite. Das Verhältnis D/d bestimmt daher die hydraulische Übersetzung des ersten Spannelementes 36a. Damit wird z.B. ein Weg des Piezoaktors 42a von 30 µm in einen Weg der Kolbenstange 99 von 200 µm umgesetzt.

Wenn sich beim Spannelement 36a die Piezoaktoren 42a in Fig. 3 nach links ausdehnen, wird die Membran 95 in das Hydraulikvolumen 50a vorgewölbt, mit der Folge, daß der Kolben 96 und die Kolbenstange 99 nach links bewegt werden. Die zwischen dem Kolben 96 und der Stirnfläche 98 eingeschlossene elastische Dichtung 97 wird dabei elastisch komprimiert.

Es versteht sich dabei, daß anstelle der Anordnung gemäß Fig. 3 die Elemente "Kolben" und "Membran" auf Antriebs- und Abtriebsseite auch beliebig austauschbar sind, je nachdem, welchen Randbedingungen im einzelnen gehorcht werden muß.

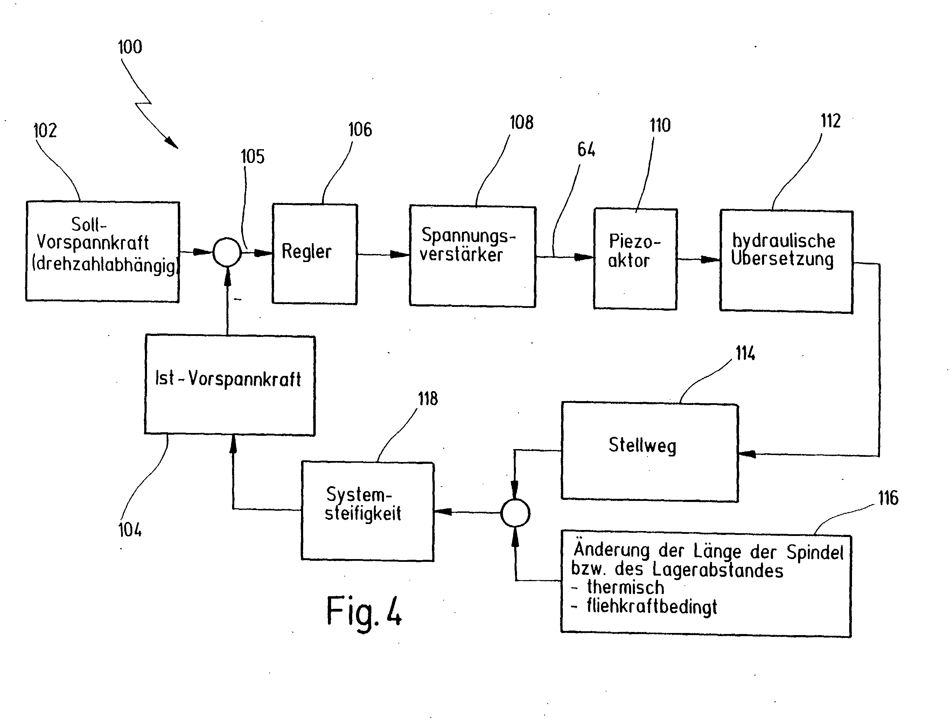

In Fig. 4 ist ein Regelkreis gemäß einem Ausführungsbeispiel des erfindungsgemäßen Verfahrens in seiner Gesamtheit mit der Bezugsziffer 100 bezeichnet.

In diesem Ausführungsbeispiel wird entsprechend dem Schritt 102 zunächst eine Soll-Vorspannkraft vorgegeben, die bspw. anhand einer Drehzahl-Vorspannkraft-Kennlinie ausgewählt wird. Die Soll-Vorspannkraft wird mit einer im Schritt 104 bestimmten Ist-Vorspannkraft verglichen. Dabei wird eine Regeldifferenz 105 bestimmt, die einem mit 106 bezeichneten Schritt zugeführt ist. Der Schritt 106 symbolisiert denjenigen Reglerschaltkreis, in dem anhand der Regeldifferenz 105 das Stellsignal 64 für den Piezoaktor 42 bestimmt wird. Dieses wird dann in an sich bekannter Weise im Schritt 108 verstärkt und anschließend im Schritt 110 dem Piezoaktor zugeführt. Der Piezoaktor 42 reagiert auf das Stellsignal 64 mit einer entsprechenden Längsausdehnung, die gemäß Schritt 112 mit Hilfe des Hydraulikelements 44 vergrößert wird.

Im Schritt 114 wird der tatsächlich auf die Lagerhülse 18 einwirkende Stellweg bestimmt, was gemäß dem bevorzugten Ausführungsbeispiel der Erfindung mit Hilfe des Drucksensors 60 erfolgt. Die hieraus erhaltene Ist-Größe wird dann in Schritt 116 mit vorhandenen Störgrößen, insbesondere der thermischen und der Fliehkraft bedingten Änderung der Länge der Spindel 10 verknüpft. Anhand dieser Größen wird in Schritt 118 die Systemsteifigkeit der gesamten Spindel 10 berechnet. Aus dieser läßt sich dann gemäß Schritt 104 die tatsächlich anliegende Ist-Vorspannkraft bestimmen.

## Patentansprüche

1. Spindel für eine Werkzeugmaschine, insbesondere Hochfrequenzspindel, mit einem ersten Spannelement (36) zum Einstellen einer Vorspannung eines in der Spindel (10) angeordneten Lagers (14, 16), insbesondere eines Schrägkugellagers, wobei das erste Spannelement (36) mindestens einen in seiner Längsausdehnung veränderlichen Piezoaktor (42) aufweist und in Abhängigkeit der Längsausdehnung des Piezoaktors (42) eine veränderbare Vorspannkraft auf zumindest eine Lagerschale (68, 74) des Lagers (14, 16) ausübt, **dadurch gekennzeichnet, daß** im Kraftfluß zwischen dem ersten Spannelement (36) und der Lagerschale (68, 74) ein Hydraulikelement (44) angeordnet ist, welches eingangsseitig ein von dem ersten Spannelement (36) beaufschlagtes Antriebsmittel (46) und ausgangsseitig ein Abtriebsmittel (48) aufweist, wobei der hydraulisch wirksame Querschnitt (47; D) des Antriebsmittels (46) größer ist als der hydraulisch wirksame Querschnitt (49; d) des Abtriebsmittels (48).

2. Spindel nach Anspruch 1, **dadurch gekennzeichnet, daß** das Antriebsmittel (46) achsgleich zu der Längsausdehnung des Piezoaktors (42) angeordnet ist.

3. Spindel nach Anspruch 1 oder 2, **dadurch gekennzeichnet, daß** das Abtriebsmittel (48) ein formstabiler Kolben (96, 99) ist.

4. Spindel nach Anspruch 1 oder 2, **dadurch gekennzeichnet, daß** das Antriebsmittel (46) eine flexible Membran (95) ist.

5. Spindel nach einem oder mehreren der Ansprüche 1 bis 4, **dadurch gekennzeichnet, daß** das Hydraulikelement (44) Mittel (56) zum Einstellen einer hydraulisch erzeugten Grundvorspannung des Lagers (14, 16) aufweist.

6. Spindel nach einem oder mehreren der Ansprüche 1 bis 5, **dadurch gekennzeichnet, daß** sie umfänglich verteilt mehrere erste Spannelemente (36) aufweist.

7. Spindel nach Anspruch 6, **dadurch gekennzeichnet, daß** sie umfänglich verteilt drei erste Spannelemente (36) aufweist, die mit drei umfänglich verteilten Antriebs- (46) und Abtriebsmitteln (48) zusammenwirken.

8. Spindel nach Anspruch 6 oder 7, **dadurch gekennzeichnet, daß** das Hydraulikelement (44) ein sich umfänglich erstrekkendes Hydraulikvolumen (50, 58, 59) aufweist und daß die ersten Spannelemente (36) alle auf das Hydraulikvolumen (50, 58, 59) einwirken.

9. Spindel nach einem oder mehreren der Ansprüche 1 bis 8, **dadurch gekennzeichnet, daß** das Hydraulikelement (44) einen Drucksensor (60) aufweist, mit dem ein Istdruck in dem Hydraulikvolumen (50, 58, 59) bestimmbar ist.

10. Spindel nach Anspruch 9, **dadurch gekennzeichnet, daß** ein Ausgangssignal des Drucksensors (60) einem Regler (62) zum Erzeugen eines Stellsignals (64) für das Spannelement (36) zuführbar ist.

11. Spindel, insbesondere nach einem oder mehreren der Ansprüche 1 bis 10, mit einem Hydraulikelement (44) zum Einstellen einer Vorspannung eines in der Spindel (10) angeordneten Lagers (14, 16), **dadurch gekennzeichnet, daß** eine Hydraulikflüssigkeit in dem Hydraulikelement (44) eine metallische Flüssigkeit mit einem Schmelzpunkt von weniger als 20°C ist.

12. Spindel nach einem oder mehreren der Ansprüche 1 bis 11, **dadurch gekennzeichnet, daß** sie zumindest ein weiteres Spannelement (38) aufweist, das von dem ersten Spannelement (36) unabhängig ist, wobei sich die Kraftwirkung des weiteren Spannelements (38) mit der Kraftwirkung des ersten Spannelements (36) überlagert.

13. Spindel nach Anspruch 11, **dadurch gekennzeichnet, daß** das weitere Spannelement (38) ein mechanisches Federelement ist.

14. Werkzeugmaschine mit einer Spindel (10) nach einem oder mehreren der Ansprüche 1 bis 13.

15. Verfahren zum Einstellen einer Vorspannung eines in einer Spindel (10) angeordneten Lagers (14, 16), mit den Schritten:
- Vorgeben (102) einer eine Soll-Vorspannkraft repräsentierenden Größe,
- Bestimmen (104) einer eine Ist-Vorspannkraft repräsentierenden Größe,
- Bestimmen einer Regeldifferenz (105) zwischen den die Soll-Vorspannkraft und die Ist-Vorspannkraft repräsentierenden Größen, und
- Ansteuern (110) eines in einem ersten Spannelement (36) angeordneten Piezoaktors (42) in Abhängigkeit der Regeldifferenz (105), wobei das erste Spannelement (36) in Abhängigkeit der Längsausdehnung des Piezoaktors (42) eine veränderbare Vorspannkraft auf zumindest eine Lagerschale (68, 74) des Lagers (14, 16) ausübt,
**dadurch gekennzeichnet, daß** die auf die Lagerschale (68, 74) einwirkende Längsausdehnung des Piezoaktors (42) mit einem im Kraftfluß zwischen dem ersten Spannelement (36) und der Lagerschale (68, 74) angeordneten Hydraulikelement (44) hydraulisch vergrößert wird.

16. Verfahren nach Anspruch 15, **dadurch gekennzeichnet, daß** die die Ist-Vorspannkraft repräsentierende Größe mit Hilfe eines Drucksensors (60) bestimmt wird, der den Druck in einem Hydraulikvolumen (50, 58, 59) des Hydraulikelements (44) mißt.

17. Verfahren nach Anspruch 15 oder 16, **dadurch gekennzeichnet, daß** die Bestimmung (104) der Ist-Vorspannkraft und/ oder die Vorgabe (102) der Soll-Vorspannkraft in Abhängigkeit von im Betrieb der Spindel (10) auftretenden Längenänderungen an der Spindel (10) erfolgt (116).

## Claims

1. A spindle for a machine tool, in particular a highfrequency spindle, comprising a first clamping element (36) for setting a bias of a bearing (14, 16) located within the spindle (10), in particular of an angular ball bearing, wherein the first clamping element (36) comprises at least one piezo actuator (42) being variable in its longitudinal extension and, depending on the longitudinal extension of the piezo actuator (42) exerts a variable bias onto at least one bearing shell (68, 74) of the bearing (14, 16), **characterized in that** a hydraulic element (44) is provided within the power flow between the first clamping element (36) and the bearing shell (68, 74), the hydraulic element comprising at its input side a drive means (46) biased by the first clamping element (36) and at its output side an output means (48), wherein the hydraulically effective cross section (47; D) of the drive means (46) is larger than the hydraulically effective cross section (49; d) of the output means (48).

2. The spindle of claim 1, **characterized in that** the drive means (46) is located in the same direction as the longitudinal extension of the piezo actuator (42).

3. The spindle of claim 1 or 2, **characterized in that** the drive means (48) is a piston (96, 99) of fixed shape.

4. The spindle of claim 1 or 2, **characterized in that** the drive means (46) is a flexible membrane (95).

5. The spindle of one or more of claims 1 to 4, **characterized in that** the hydraulic element (44) comprises means (56) for adjusting a hydraulically generated basic bias of the bearing (14, 16).

6. The spindle of one or more of claims 1 to 5, **characterized in that** it comprises several first clamping elements (36) arranged circumferentially spread.

7. The spindle of claim 6, **characterized in that** it comprises three circumferentially spread first clamping elements (36) that cooperate with three circumferentially spread drive (46) and output (48) means.

8. The spindle of claim 6 or 7, **characterized in that** the hydraulic element (44) comprises a hydraulic volume (50, 58, 59) extending circumferentially, and **in that** the first clamping elements (36) all engage the hydraulic volume (50, 58, 59).

9. The spindle of one or more of claims 1 to 8, **characterized in that** the hydraulic element (44) comprises a pressure sensor (60) whereby an actual pressure within the hydraulic volume (50, 58, 59) can be detected.

10. The spindle of claim 9, **characterized in that** an output signal of the pressure sensor (60) can be fed to a controller (62) for generating a control signal (64) for the clamping element (36).

11. A spindle, in particular according to one or more of claims 1 to 10, comprising a hydraulic element (44) for adjusting a bias of a bearing (14, 16) arranged within the spindle (10), **characterized in that** a hydraulic liquid within the hydraulic element (44) is a metallic liquid having a melting point of less than 20°C.

12. The spindle of one or more of claims 1 to 11, **characterized in that** it comprises at least one additional clamping element (38) being independent from the first clamping element (36), wherein the force action of the additional clamping element (38) superimposes with the force action of the first clamping element (36).

13. The spindle of claim 11, **characterized in that** the additional clamping element (38) is a mechanical spring element.

14. A tool machine comprising a spindle (10) according to one or more of claims 1 to 13.

15. A method of adjusting a bias of a bearing (14, 16) arranged within a spindle (10), comprising the steps of:
- providing (102) a value representative of a set bias force,
- determining (104) a value representative of an actual bias force,
- determining a control difference (105) between the values representing the set bias force and the actual bias force, and
- driving (110) a piezo actuator (42) located within the first clamping element (36) in dependence of the control difference (105), wherein the first clamping element (36) effects a variable bias force onto at least one bearing shell (68, 74) of the bearing (14, 16), depending on the longitudinal extension of the piezo actuator (42),
**characterized in that** the longitudinal extension of the piezo actuator (42) acting onto the bearing shell (68, 74) is increased hydraulically by a hydraulic element (44) arranged within the power flow between the first clamping element (36) and the bearing shell (68, 74).

16. The method of claim 15, **characterized in that** the value representative of the actual bias force is determined by means of a pressure sensor (60) that measures the pressure within a hydraulic volume (50, 58, 59) of the hydraulic element (44).

17. The method of claim 15 or 16, **characterized in that** the determination (104) of the actual bias force and/or the providing (102) of the set bias force is done (116) depending from length variations at the spindle (10) occurring during operation of the spindle (10).

## Revendications

1. Broche pour machine-outil, en particulier broche haute fréquence, comprenant un premier élément de serrage (36) destiné à ajuster la précontrainte d'un coussinet (14, 16) monté dans la broche (10), en particulier d'un roulement à billes oblique, le premier élément de serrage (36) présentant au moins un piezo-actionneur (42) dont la dimension longitudinale est susceptible d'être modifiée et exerçant une précontrainte variable sur au moins une coquille (68, 74) du coussinet (14, 16), en fonction de la dimension longitudinale du piezo-actionneur (42), **caractérisée en ce que**, dans la chaîne de transmission de force entre le premier élément de serrage (36) et la coquille (68, 74) est monté un élément hydraulique (44) présentant, du côté de l'entrée, un élément d'entraînement (46) sollicité par le premier élément de serrage (36) et, du côté de la sortie, un élément entraîné (48), la section hydrauliquement efficace (47 ; D) de l'élément d'entraînement (46) étant supérieure à la section hydrauliquement efficace (49 ; d) de l'élément entraîné (48).

2. Broche selon la revendication 1, **caractérisée en ce que** l'élément d'entraînement (46) est monté sur un axe qui correspond à la dimension longitudinale du piezo-actionneur (42).

3. Broche selon la revendication 1 ou 2, **caractérisée en ce que** l'élément entraîné (48) est un piston (96, 99) indéformable.

4. Broche selon la revendication 1 ou 2, **caractérisée en ce que** l'élément entraîné (46) est une membrane flexible (95).

5. Broche selon l'une ou plusieurs des revendications 1 à 4, **caractérisée en ce que** l'élément hydraulique (44) présente des moyens (56) permettant de régler une précontrainte de base du coussinet (14, 16), produite de façon hydraulique.

6. Broche selon l'une ou plusieurs des revendications 1 à 5, **caractérisée en ce qu'**elle présente plusieurs premiers éléments de serrage (36) répartis sur la circonférence.

7. Broche selon la revendication 6, **caractérisée en ce qu'**elle présente trois premiers éléments de serrage (36) répartis sur la circonférence, qui coopèrent avec trois éléments d'entraînement (46) et éléments entraînés (48) répartis sur la circonférence.

8. Broche selon la revendication 6 ou 7, **caractérisée en ce que** l'élément hydraulique (44) présente un volume hydraulique (50, 58, 59) s'étendant sur la circonférence, et **en ce que** les premiers éléments de serrage (36) agissent tous sur le volume hydraulique (50, 58, 59).

9. Broche selon l'une ou plusieurs des revendications 1 à 8, **caractérisée en ce que** l'élément hydraulique (44) présente un capteur de pression (60), au moyen duquel il est possible de déterminer une pression effective dans le volume hydraulique (50, 58, 59).

10. Broche selon la revendication 9, **caractérisée en ce qu'**il est possible d'acheminer un signal de sortie du capteur de pression (60) vers un régulateur (62) afin de produire un signal de réglage (64) destiné à l'élément de serrage (36).

11. Broche, en particulier selon l'une ou plusieurs des revendications 1 à 10, comprenant un élément hydraulique (44) destiné à ajuster la précontrainte d'un coussinet (14, 16) monté dans la broche (10), **caractérisée en ce qu'**un fluide hydraulique présent dans l'élément hydraulique (44) est un fluide métallique avec un point de fusion inférieur à 20°C.

12. Broche selon l'une ou plusieurs des revendications 1 à 11, **caractérisée en ce qu'**elle présente au moins un autre élément de serrage (38), indépendant du premier élément de serrage (36), l'action de la force de l'autre élément de serrage (38) se superposant à l'action de la force du premier élément de serrage (36).

13. Broche selon la revendication 11, **caractérisée en ce que** l'autre élément de serrage (38) est un élément mécanique élastique.

14. Machine-outil équipée d'une broche (10) selon l'une ou plusieurs des revendications 1 à 13.

15. Procédé permettant d'ajuster la précontrainte d'un coussinet (14, 16) monté dans une broche (10), comprenant les étapes qui consistent à :
- spécifier (en 102) une valeur représentative d'une précontrainte de consigne,
- déterminer (en 104) une valeur représentative d'une précontrainte effective,
- déterminer un écart de régulation (105) entre les valeurs représentatives d'une précontrainte de consigne et d'une précontrainte effective, et
- activation (en 110) d'un plezo-actionneur (42) monté dans le premier élément de serrage (36) en fonction de l'écart de régulation (105), le premier élément de serrage (36) exerçant une précontrainte variable sur au moins une coquille (68, 74) du coussinet (14, 16), en fonction de la dimension longitudinale du piezo-actionneur (42),
**caractérisé en ce que** la dimension longitudinale du piezo-actionneur (42) qui agit sur la coquille (68, 74) est agrandie hydrauliquement grâce à un élément hydraulique (44) monté dans la chaîne de transmission de force entre le premier élément de serrage (36) et la coquille (68, 74).

16. Procédé selon la revendication 15, **caractérisé en ce que** la valeur représentative de la précontrainte effective est déterminée à l'aide d'un capteur de pression (60) qui mesure la pression qui règne dans un volume hydraulique (50, 58, 59) de l'élément hydraulique (44).

17. Procédé selon la revendication 15 ou 16, **caractérisé en ce que** la détermination (en 104) de la précontrainte effective et/ou la spécification (en 102) de la précontrainte de consigne intervient (en 116) en fonction de modifications de la longueur de la broche (10), au cours du fonctionnement de la broche (10).
